# EUROPEAN PATENT APPLICATION

(11) **EP 4 716 063 A1**
(43) Date of publication of application: **25.03.2026**
(21) Application number: 24315433.3
(22) Date of filing: 23.09.2024
(51) Int. Cl.: H02J 13/00, H02H 1/00

(54) **SYSTEM FOR THE MANAGEMENT OF THE CONNECTION OF AN EQUIPMENT TO AN ELECTRICAL INSTALLATION**

(71) Applicant: HAGER-ELECTRO SAS, 67210 Obernai (FR)
(72) Inventor: Baumann, Eric, 67610 LA WANTZENAU (FR); Helfter, Marc, 67114 ESCHAU (FR); Duvernelle, Christophe, 67500 HAGUENAU (FR); Wilhelm Dillier, Teddy, 67000 STRASBOURG (FR); Bienert, Florian, 67290 LOHR (FR); Reiner, Ulrich, 67691 HOCHSPEYER (DE); Raubuch, Sebastian, 66663 MERZIG (DE); Burkhart, Jan, 66440 BLIESKASTEL (DE); Klag, Johannes, 66440 BLIESKASTEL (DE); Weinard, Christian, 66740 SAARLOUIS (DE); Hoffmann, Axel, 57200 SARREGUEMINES (FR); De Bree, Alexander, 66539 NEUNKIRCHEN (DE)
(74) Representative: Ipsilon

(57) **Abstract**

The invention concerns a system for the management of the connection of an equipment (3) to an electrical installation (2), characterized in that the system comprises:
- a terminal (1) connected to the electrical installation (2) and comprising a socket (13) arranged to be plugged by the equipment (3), this socket (13) comprising pins (131) for electrical energy flow, and a communication pin (132) linked with a safety verification device (12) embedded in the terminal (2),
- a plug (31) of the equipment (3) to be connected comprising pins (311, 312) complementary to the socket pins (131, 132),
- an activated protection control device (32) embedded in the plug (3)1 of the equipment (3) to cooperate with the safety verification device (12) through the communication pin (132) of the socket (13), this activated protection control device (32) being made by a controller (321) connected to the communication pin (132).

## Description

The present invention relates to the field of the connection of an equipment to an electrical installation and more particularly to the field of a system arranged to operate a management of such a connection of an equipment.

The installation of some particular electrical equipment or components like electric energy generating devices, for example solar panels, private water turbines or wind turbines, that today require a manual electrical installation in a house, an apartment or any building is done by specialized technicians. The intervention of such technicians is mainly necessary for the connection step of these equipment or components to the electrical installation due to potentially accessible hazardous electrical contacts. Indeed, considering the technical specificities of the connection at least relative to the safety use of the equipment connected to the electrical installation, such an operation can rarely be carried out by the final customer or the inhabitant of the building himself.

To overcome this problem, some connection sets with personal protection have been developed for the plugging of equipment or components like solar devices to household sockets and more particularly on Schuko type sockets. An example of such a connection set is detailed by publication DE 20 2023 000 090 U1. The connection set comprises a relay arranged to operate a disconnection of the plugged equipment when the insertion of its plug in the corresponding socket is not perfectly performed. Thus, without a correct plugged connection of the equipment on the electrical installation, the pins of the plug are not electrically connected to the equipment. Such a technology provides an "easy to perform" installation for the unskilled customers. However, the proposed personal protection being integrated in the plug of the equipment, the safety mechanism is based on one single unique device carried by the plug of the equipment. In the event of the malfunction or of a defective condition of the plug mechanism, the connection of the equipment to the electrical installation might be operated without the safety of this connection being guaranteed.

The present invention aims to overcome these drawbacks of the prior art by proposing a solution based on a system able to optimize the security of the connection of an equipment or component to the electrical installation of a building so that the connection safety mechanism be not restricted on the plug of the connected equipment while being an easy-to-use system for a person without technical skills.

The invention thus aims a system for the management of the connection of an equipment to an electrical installation of at least one part of a building, characterized in that the system comprises:
- a terminal connected to the electrical installation through the electricity meter and/or the distribution board of the electrical installation, this terminal comprising a socket arranged to be plugged by the equipment, this socket comprising pins linked to at least a neutral line, a ground wire and at least one phase line, and a communication pin linked with at least one safety verification device embedded in the terminal,
- a plug of the equipment to be connected comprising pins complementary to the socket pins,
- an activated protection control device embedded in the plug of the equipment to cooperate with the safety verification device through at least the communication pin of the socket, this activated protection control device being made by at least a controller connected to the communication pin.

The invention further concerns an implementation method for the system according to the invention, characterized in that, following the plugging of the equipment on the socket of the terminal, the method comprises:
- a step of providing a signal from the terminal to confirm the connection of the equipment to the electrical installation,
- a step of controlling the electrical protection of the device,
- a step of supplying the equipment with electrical energy from the electrical installation passing through the terminal.

The invention will be better understood, thanks to the following description, which relates to preferred embodiments, given as a non-limiting example, and explained with reference to the attached schematic drawings, in which:

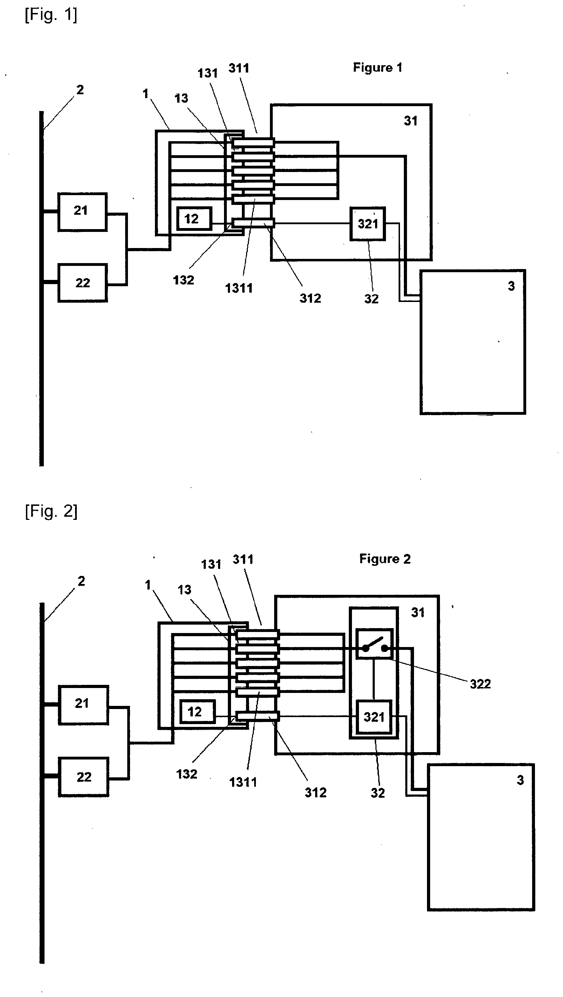

[Fig. 1] represents a schematic illustration of a first example of an arrangement of the system of the invention,
[Fig. 2] represents a schematic illustration of a second example of an arrangement of the system of the invention,

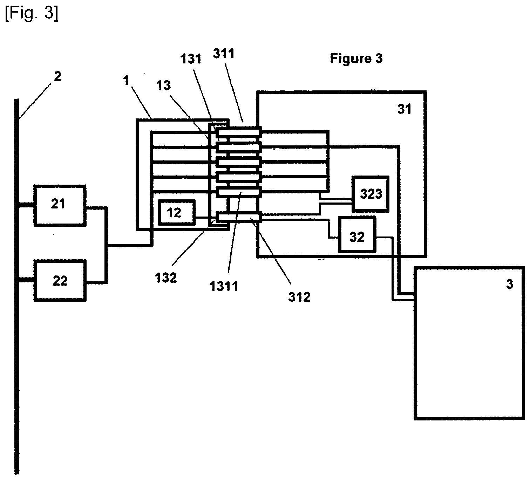

[Fig. 3] represents a schematic illustration of a third example of an arrangement of the system of the invention.

The invention concerns a system for the management of the connection of an equipment 3 to an electrical installation 2 of at least one part of a building, characterized in that the system comprises:
- a terminal 1 connected to the electrical installation 2 through the electricity meter 21 and/or the distribution board 22 of the electrical installation 2, this terminal 1 comprising a socket 13 arranged to be plugged by the equipment 3, this socket 13 comprising pins 131 linked to at least a neutral line, a ground wire 1311 and at least one phase line, and a communication pin 132 linked with at least one safety verification device 12 embedded in the terminal 2,
- a plug 31 of the equipment 3 to be connected comprising pins 311, 312 complementary to the socket pins 131, 132,
- an activated protection control device 32 embedded in the plug 31 of the equipment 3 to cooperate with the safety verification device 12 through at least the communication pin 132 of the socket 13, this activated protection control device 32 being made by at least a controller 321 connected to the communication pin 132.

The system of the invention is arranged to operate a control of the connection through a communication between the plug 31 of the component or equipment 3 and a terminal 1 interfacing with the electrical installation 2 providing electrical energy. The communication between the plug 31 of the component or equipment 3 and the terminal 1 is operated through the interfacing plug 31 and socket 13 and more particularly through their respective communication pin 132 connected together. The connection of the plug 31 of the equipment 3 on the socket 13 of the terminal 1 triggers or launches an exchange of information so that some technical data are transmitted from the equipment 3 to the terminal 1. Based on these data, the terminal 1 is able to operate an identification of the connected equipment 3, at least a technical identification of the connected equipment, for example like the type of electrical power requested by this equipment 3 and/or some safety data relative to the electrical energy that will pass through the plug 31 / socket 13 interface. The identification and control of the technical data from the equipment 3 is at least partially performed by the safety verification device 12 of the terminal 1. Based on these technical data, the safety verification device 12 of the terminal 1 is able to communicate with the activated protection control device 32 embedded in the plug 31 of the equipment 3 and its controller 321 to verify that the electrical safety mechanism of the equipment 3 is operating. In the plug 31, the controller 321 of the activated protection control device 32 performs the verification of at least one feature of the electrical energy passing through this plug 31 with respect to at least one predefined threshold. This verification by the controller 321 may be performed continuously. The results of this verification are transmitted by the controller 321 through the communication pin 132 to the safety verification device 12 of the terminal 1, preferably in real time or alternatively at regular intervals. In case of misfunctioning or in the event of a communication shutdown between the plug 31 and the safety verification device 12, the terminal 1 is able to stop the electrical energy supply of the connected equipment 3.

The socket 13 of the terminal 1 in the system of the invention comprises pins 131 linked to at least a neutral line, a ground wire 1311 and at least one phase line. However, it should be noted that, depending on the type of electrical flow passing through this socket 13 and the number of phase lines needed, some additional pins dedicated to the flow of electrical energy may be integrated in the socket 13 and in the complementary plug 31.

According to an example relative to a variant of the system of the invention, the activated protection control device 32 further comprises a switch mechanism 322 positioned on the electrical energy supply line of the plug 31, this switch mechanism 322 being managed and actuated by the controller 321. The switch mechanism 322 is positioned on the electrical energy supply line of the plug 31 so that the mechanism 322 is able to stop the electricity supply of the equipment 3 through the plug 31. This switch mechanism 322 is connected to the controller 321 so that this mechanism may be actuated by the controller 321. Thus, in the event the verification by the controller 321 of at least one feature of the electrical energy passing through the plug 31, identifies one or several threshold overruns, the controller 321 is able to trigger the switch mechanism 322 and stop the electric flow.

According to an example relative to another variant of the system of the invention which may be combined with the previous detailed variants of the system, the switch mechanism 322 of the activated protection control device 32 is made by a circuit breaker. Such a circuit breaker being positioned on the electrical energy supply line of the plug 31, is arranged to operate a control of the electrical flow by itself and is able to be triggered in the event of electrical supply with overcurrent. The use of a circuit breaker as a switch mechanism 322 provides an additional way to stop the electrical flow passing through the plug 31. Indeed, the electrical flow through the plug 31 can be stopped by the circuit breaker triggered by itself or under the actuation of the controller 322 so that the activated protection control device 32 performs a double control of the supplied electrical energy through the plug 31. Such double control optimizes the safety level performed by the activated protection control device 32. Depending on the particular technical features of the type of circuit breaker used as switch mechanism 322, the switch mechanism 322 may benefit from the advantages and properties provided by the use of such a type of circuit breaker. Thus, this circuit breaker may be a Miniature Circuit Breaker known as MCB or a Residual Current Device known as RCD and similar devices. Further, the circuit breaker selected as switch mechanism 322 for the activated protection control device 32 may be remotely controllable so that the electrical flow through the plug 31 is able to be stopped independently on the functioning of the activated protection control device 32. This remote control of the switch mechanism 322 may be operated through a remote communication device connected, directly or indirectly, to the switch mechanism 322 and embedded with the switch mechanism 322 and the controller 321 in the activated protection control device 32 or in the plug 31 of the equipment 3.

According to an example relative to another variant of the system of the invention which may be combined with the previous detailed variants of the system, the controller 321 is in communication with a device positioned outside the equipment 3. This communication of the controller 321 with an external device allows the transmission of information or data relative to the stop of the electrical flow through the plug 31. Thus, the conditions for the triggering of this stop of the electrical energy supply can be transmitted to the external device to make an analysis of the transmitted data and/or a verification of the status of the equipment 3. Further, depending on the results of these analyses and verifications, an intervention at the plug 31 level or on the equipment 3 may be performed. Preferably, the external device is the terminal 1 of the system. However, this external device might be a grid operator. Alternatively, the external device might be an external controller in connection with a grid operator. The communication between the controller 321 and this external device might pass through the electrical installation 2 and so through the communication pin 132 of the plug 31 / socket 13 interface and the terminal 1 as the terminal 1 is an interface between the plug 31 and the electrical installation 2. According to an alternative arrangement, the communication between the controller 321 and this external device is operated through a remote communication device connected to the controller 321 and embedded with the controller 321 in the activated protection control device 32 or in the plug 31 of the equipment 3.

According to an example relative to another variant of the system of the invention which may be combined with the previous detailed variants of the system, the communication pin 132 is connected to at least one communication means of the equipment 3. Such an arrangement provides a communication link between the terminal 1 and the equipment 3 itself and not only the plug 31 of the equipment 3. This arrangement allows the transmission and exchanges of data between the terminal 1 and at least one part of the equipment 3 different from the plug 31. Such a communication link allows the checking by the terminal 1 of particular information or data that cannot be stored in the plug 31 of the equipment 3 or provides a direct communication with specific parts of the equipment 3 which are at distance from the plug 31.

According to an example relative to another variant of the system of the invention which may be combined with the previous detailed variants of the system, the plug 31 of the equipment 3 further comprises an equipment identification device configured to cooperate with the safety verification device 12 of the terminal 1, this equipment identification device comprising a resistor 323 connected between the communication pin 132 and the ground wire pin 1311 of the plug 31. Such an arrangement enables some data allowing the identification of the equipment to be obtained by measuring the current flow or voltage drop through or over the resistor 323 when a predetermined voltage or current is applied between the communication pin 132 and the ground wire pin 1311, so that the equipment may be automatically identified by the safety verification device 12 of the terminal 1. The passage of this electrical signal through the resistor 323 provides a passive reaction of the resistor 323 that allows the terminal 1 to identify the resistance of the equipment identification device. Indeed, following the application of a predetermined voltage between the communication pin 132 and the ground wire pin 1311, the safety verification device 12 may identify the equipment 3 by measuring the current flow through the resistor 323. Alternatively, the safety verification device 12 of the terminal 1 may identify the resistance of the equipment identification device by applying a predetermined current between the communication pin 132 and the ground wire pin 1311 and by measuring the resulting voltage drop over the resistor 323. The resistor 323 has a predetermined resistance value that carries the information allowing to identify the equipment. The measured current flow or voltage drop, when a predetermined voltage or current is applied, is indicative of the resistance value of the resistor 323. Hence, the nature of the equipment connected to the electrical installation 2 can be deduced from the measured current flow or voltage drop. Thus, considering the reaction of the resistor 323 identified from the communication pin 132, the terminal 1 is able to determine at least one data relative to the resistance of this resistor 323 in the connected plug 31 of the equipment 3 to the socket 13 of the terminal 1.

According to examples relative to particular arrangements of the previous variant of the system, the equipment identification device may be embedded in the protection control device 32 or the controller 321. In that case, information allowing to identify the equipment is conveyed from the protection control device 32 or the controller 321 through the communication pin 132 to the safety verification device 12.

The invention also concerns an implementation method for the system according to invention, characterized in that, following the plugging of the equipment 3 on the socket 13 of the terminal 1, the method comprises:
- a step of providing a signal from the terminal 1 to confirm the connection of the equipment 3 to the electrical installation 2,
- a step of controlling the electrical protection of the equipment 3,
- a step of supplying the equipment 3 with electrical energy from the electrical installation 2 passing through the terminal 1.
Once the plug 31 is inserted into the socket 13 of the terminal 1, an electrical flow is sent to the plug 31 turning on the activated protection control device 32. Once the activated protection control device 32 is turned on, eventually combined with the reception of a signal from the terminal 1 through the communication pin 132, the activated protection control device 32 provides a back signal back to the terminal 1 or to its safety verification device 12 confirming the connection of the equipment 3 to the electrical installation 2 through the terminal 1.

According to an example relative to another variant of the implementation method of the invention, the step of controlling the electrical protection of the equipment 3 comprises:
- a step of confirming the activation of the controller 321 of the activated protection control device 32 by providing a signal to the safety verification device 12 of the terminal 1,
- a step of providing an activation signal from the safety verification device 12 of the terminal 1 to the activated protection control device 32 of the plug 31 actuating the closure of the switch mechanism 322,
- a step of closure of the switch mechanism 322,
- a step of providing a signal by the controller 321 to the safety verification device 12 confirming the closure of the switch mechanism 322.
Once the terminal receives the confirmation that the switch mechanism 322 is closed, the equipment 3 is able to be supplied with electrical energy from the electrical installation 2 and passing through the terminal 1.

Alternatively, the controlling step of the electrical protection of the equipment 3 is operated by the activated protection control device 32 turned on that automatically turns on the controller 321 and closes the associated circuit breaker as switch mechanism 322 so that a signal is sent by the controller 321 to the safety verification device 12 confirming the closure of the switch mechanism 322.

According to an example relative to another variant of the implementation method of the invention which may be combined with the previous detailed variants of the method, previously, the method comprises a step of identification by the terminal 1 and/or by a safety verification device 12 embedded in the terminal 1 through the communication pin 132 connection, of the kind of equipment 3 and/or technical specifications of the equipment 3 plugged on the socket 13 of the terminal.

Of course, the invention is not limited to the embodiments described and shown in the attached drawings. Modifications remain possible, in particular from the point of view of the constitution of the various elements or by substitution of technical equivalents, without departing from the scope of protection of the invention.

## Claims

1. System for the management of the connection of an equipment (3) to an electrical installation (2) of at least one part of a building, **characterized in that** the system comprises:
- a terminal (1) connected to the electrical installation (2) through the electricity meter (21) and/or the distribution board (22) of the electrical installation (2), this terminal (1) comprising a socket (13) arranged to be plugged by the equipment (3), this socket (13) comprising pins (131) linked to at least a neutral line, a ground wire (1311) and at least one phase line, and a communication pin (132) linked with at least one safety verification device (12) embedded in the terminal (2),
- a plug (31) of the equipment (3) to be connected comprising pins (311, 312) complementary to the socket pins (131, 132),
- an activated protection control device (32) embedded in the plug (3)1 of the equipment (3) to cooperate with the safety verification device (12) through at least the communication pin (132) of the socket (13), this activated protection control device (32) being made by at least a controller (321) connected to the communication pin (132).

2. System according to claim 1, **characterized in that** the activated protection control device (32) further comprises a switch mechanism (322) positioned on the electrical energy supply line of the plug (31), this switch mechanism (322) being managed and actuated by the controller (321).

3. System according to claim 2, **characterized in that** the switch mechanism (322) of the activated protection control device is made by a circuit breaker.

4. System according to any of the previous claims, **characterized in that** the controller (321) is in communication with a device positioned outside the equipment (3).

5. System according to any of the previous claims, **characterized in that** the communication pin (132) is connected to at least one communication means of the equipment (3).

6. System according to any of the previous claims, **characterized in that** the plug (31) of the equipment (3) further comprises an equipment identification device configured to cooperate with the safety verification device (12) of the terminal (1), this equipment identification device comprising a resistor (323) connected between the communication pin (132) and the ground wire pin (1311) of the plug (31).

7. Implementation method for the system according to claims 1 to 6, **characterized in that**, following the plugging of the equipment (3) on the socket (13) of the terminal (1), the method comprises:
- a step of providing a signal from the terminal (1) to confirm the connection of the equipment (3) to the electrical installation (2),
- a step of controlling the electrical protection of the equipment (3),
- a step of supplying the equipment (3) with electrical energy from the electrical installation (2) passing through the terminal (1).

8. Implementation method according to claim 7 for a system according to claim 2, **characterized in that** the step of controlling the electrical protection of the equipment (3) comprises:
- a step of confirming the activation of the controller (321) of the activated protection control device (32) by providing a signal to the safety verification device (12) of the terminal (1),
- a step of providing an activation signal from the safety verification device (12) of the terminal (1) to the activated protection control device (32) of the plug (31) actuating the closure of the switch mechanism (322),
- a step of closure of the switch mechanism (322),
- a step of providing a signal by the controller (321) to the safety verification device (12) confirming the closure of the switch mechanism (322).

9. Implementation method according to claim 7 for a system according to claim 2, **characterized in that** the step of controlling the electrical protection of the equipment (3) comprises:
- a step of activating the controller (321) and the closure of the switch mechanism (322) by the activated protection control device (32),
- a step of providing a signal by the controller (321) to the safety verification device (12) confirming the closure of the switch mechanism (322).

10. lmplementation method according to claims 7 to 9, **characterized in that**, previously, the method comprises a step of identification by the terminal (1) and/or by a safety verification device (12) embedded in the terminal (1) through the communication pin (132) connection, of the kind of equipment (3) and/or technical specifications of the equipment (3) plugged on the socket (13) of the terminal (1).
